# EUROPEAN PATENT SPECIFICATION

(11) **EP 1 319 686 B1**
(45) Date of publication and mention of the grant of the patent: **17.02.2010**
(21) Application number: 02293108.3
(22) Date of filing: 16.12.2002
(51) Int. Cl.: C08L 23/06, C08L 23/08, C08K 3/22, C08L 23/26, C08L 23/02, H01B 3/44, C08L 25/04, C08L 53/02

(54) **Wear resistant, flame-retardant composition and electric cable covered with said composition**
Abriebfestes Material und flammenhemmende Zusammensetzung und mit diesem Material ummanteltes elektrisches Kabel
Matière résistante à l'usure et composition ignifuge et cable électrique revêtu de ce matériau

(30) Priority: 17.12.2001 JP 2001382711
(43) Date of publication of application: 18.06.2003
(73) Proprietor: Sumitomo Wiring Systems, Ltd., Yokkaichi-city, Mie 510-8503 (JP)
(72) Inventor: Sato, Masashi, 1-14 Nishisuehiro-cho Yokkaichi-ken, Mie (JP); Matsumoto, Shinichi, 1-14 Nishisuehiro-cho Yokkaichi-ken, Mie (JP)
(74) Representative: Uchida, Kenji

(56) References cited:
- EP-A- 0 546 841
- EP-A- 0 871 181
- EP-A- 0 953 599
- EP-A- 1 100 093
- EP-A- 1 215 237
- EP-A- 1 215 685
- US-A- 4 839 412
- US-A- 5 378 539
- US-A- 5 561 185

## Description

The present invention relates to a wear resistant, flame-retardant material composition and to an electric cable or wire covered with a material containing such a composition. This type of protected electric cable or wire is used, for example, in automotive vehicles.

Polyvinyl chloride has been widely used as a coating material for electrical cables or wires used in vehicles, owing to its excellent mechanical strength, facility with which it can be extruded around an electric cable, its excellent flexibility and paintability, as well as its low cost.

However, because of recent environmental measures, manufacturing of parts for vehicles, including coatings of electrical wires used in vehicles, has started to use halogen free (polymer) materials instead of polyvinyl chloride.

A halogen free resin composition containing a polyolefin as a base polymer and metal hydroxides as flame retardants is well known (see JP-A-7-176219 and JP-A-7-78518). This composition is a wear resistant resin composition and has the advantage of not producing toxic gas such as halogen gas when burning.

However, it is necessary to add large amounts of metal hydroxides to make this composition sufficiently flame retardant to yield a self extinguishing property. When adding such large amounts of metal hydroxides, the mechanical strength of the composition, such as its wear resistance and tensile strength falls dramatically. To prevent such lowering of mechanical strength, it has been suggested to raised the amount of propylene having a relatively high hardness and the amount of polypropylene having a high density. However, in this case, the flexibility of the protected electric cable or wire is then lowered and the manufacturability thereof is also lowered.

JP-A-6-290638 discloses a resin composition containing metal hydroxides used for insulating electrical wires. This composition contains polypropylene as main component (more than 80%). The other components of this composition are copolymers of styrene and polyethylene modified by acid anhydrides.

US-5561185 discloses as a resin composition containing metal hydroxides, used for protecting electrical wires, a resin composition containing :
(a) 40 to 88.5% by mass (or by weight) of a polypropylene type resin containing at least 50% by mass of ethylene-propylene random copolymers ;
(b)1.5 to 30% by mass of polyethylene modified by an unsaturated carboxylic acid or derivatives thereof (e.g. maleic anhydride); and
(c) 10 to 48% by mass of ethylene type copolymer, typically ethylene / vinyl acetate copolymer.

US-5180889 discloses a resin composition containing metal hydroxides as a coating for the conductor of a crash resistant cable. This composition contains :
a) ethylene / α olefin copolymer having a low density ;
b) a system of styrene - ethylene - butylenes - styrene tri-block copolymer - elastomer, preferably modified by maleic anhydride ; and
c) optionally, a shock-resistant propylene copolymer or polypropylene.

It has been proposed to improve the heat resistance of the resin composition used for electrical wire insulation by cross-linking the resin composition.

JP-A-8-161942 proposes to coat electrical wires with a resin composition containing an ethylene-vinyl acetate copolymer (EVA), ethylene-ethyl acrylate (EEA) and metal hydrates, and to cross-link this composition using electron beam irradiation.

JP-A-2000-294039 proposes to cross-link a composition containing ethylene type polymer(s) and maleic anhydride modified polyolefins.

The compositions obtained by cross-linking a resin composition containing as a base an ethylene type polymer have excellent heat resistance but insufficient wear resistance.

JP-A-2000-86830 discloses a composition obtained by cross-linking a resin composition containing polyolefin type elastomers, metal hydroxides and a coupling-agent surface treated potassium titanate.

JP-A-2000-336215 discloses a resin composition containing a polyolefin type resin prepared with magnesium hydroxide or aluminium hydroxide whose surface is treated, silicone powder and a cross-linking accelerator. This composition is also cross-linked.

Such compositions have an improved tensile and mechanical strength, but a poor flexibility and formability.

European Patent document No. 0871181 discloses a wear resistant and flame-retardant resin composition.

European Patent document No. 1215237 discloses a covering for wire comprising a resin composition consisting of one or more first polymer, one or more second polymer and a filer.

One purpose of the present invention is to provide a flame retardant resin composition containing metal hydroxides which is suitable for coating electrical wires or cables, and which has an extended flame retardant quality, as well as improved wear resistance, flexibility and formability.

To solve the above-mentioned problem, there is provided a resin composition comprising:
- (a) 30 to 90 parts by mass of high density polyethylene having a melt flow rate (MFR) of 5g/10 min at the most, and a density of at least 0.950 g/ cm²;
- (b1) 5 to 65 parts by mass of no acid-modified olefin type polymer containing intra molecular oxygen atoms, which consists of a copolymer of olefins and unsaturated monomers containing oxygen atoms;
- (c) 5 to 40 parts by mass of acid modified styrene type thermoplastic elastomers,
   with the proviso that the total of components (a), (b1) and (c) represents 100 parts by mass; and
- (d) 30 to 250 parts by mass of metal hydroxide.

Preferably, the resin composition is cross-linked by electron beam irradiation.

The invention further relates to a method for preparing an electrical cable, the method comprising the steps of:
- preparing a resin composition comprising:
   - (a) about 30 to 90 parts by mass of polyethylene having a melt flow rate (MFR) of about 5g/10 min at the most and a density of at least about 0.950;
   - (b1) about 5 to 65 parts by mass of olefin type polymer containing intra molecular oxygen atoms;
   - (c) about 5 to 40 parts by mass of acid modified styrene type thermoplastic elastomers;
      with the proviso that the total of components (a), (b1) and (c) represents 100 parts by mass; and
- (d) about 30 to 250 parts by mass of metal hydroxide; and
   - coating a conductor element with the resin composition.

Preferably, the above method further comprises the step of irradiating the resin composition with electron beams. There is further provided an electrical cable coated with a resin composition comprising:
- (a) about 30 to 90 parts by mass of polyethylene having a melt flow rate (MFR) of about 5g/10 min at the most and a density of at least about 0.950;
- (bl) about 5 to 65 parts by mass of olefin type polymer containing intra molecular oxygen atoms;
- (c) about 5 to 40 parts by mass of acid modified styrene type thermoplastic elastomers;
   with the proviso that the total of components (a), (b1) and (c) represents 100 parts by mass; and
- (d) about 30 to 250 parts by mass of metal hydroxide.
   Suitably, the resin composition is further cross-linked by electron beam irradiation.

The invention also relates to the use of a resin composition defined above for preparing an electrical cable.

Each component of the composition of the invention is chosen in order to confer, when mixed with the others, a desired property to the resulting material. Explanations regarding each of the components are given hereinafter.

Component (a) is a polyethylene having a melt flow rate (MFR) of 5g/10 min or less and a density of at least 0.950.

The polyethylene used can be any polyethylene having the above-mentioned density and melt flow rate. However, high density polyethylene or straight-chain low density polyethylene are preferably used.

When the MFR of polyethylene exceeds 5g/10 min, the formability of the composition is deteriorated.

The MFR value is measured according to JIS K 6921-2.

Moreover, when the density of the polyethylene is less than 0.950, the hardness of the composition is lowered, and its wear resistance is also lowered.

The amount of component (a) represents 30 to 90 parts by mass, preferably 30 to 80 parts by mass, in the total of 100 parts by mass consisting of component (a), component (b1) and component (c).

When the amount of component (a) is higher than the upper limit, the flexibility and formability of the composition are lowered. When this amount is lower than the lower limit, the composition has a poor wear resistance.

Examples of olefin polymers (b1) containing intramolecular oxygen atoms include a copolymer of olefins (e.g. ethylene) and unsaturated monomers containing oxygen atoms (e.g. vinyl acetate, ethyl acrylate and ethyl methacrylate). In practice, ethylene-vinyl acetate copolymers, ethylene-ethyl acrylate copolymers and ethylene-methyl methacrylate copolymers can be given as examples.

The amount of component (b1) ranges from 5 to 65 parts by mass, preferably from 10 to 60 parts by mass, in the total of 100 parts by mass consisting of component (a), component (b1) and component (c).

When the amount of component (b1) is higher than the above-mentioned upper limit, the wear resistance of the composition is lowered, whilst, when this amount is lower than the above-mentioned lower limit, the flexibility and formability of the composition are lowered.

Typical examples of unsaturated carboxylic acids or their derivatives include maleic acid, fumaric acid, maleic anhydride, maleic acid monoesters and maleic acid diesters.

The acids can be introduced into the olefin type polymer by grafting or by any direct method (copolymerisation). The amount of acid used for modification or denaturation preferably range from 0.1 to 20 by mass with respect to the mass amount of olefin type polymer.

The acid-modified styrene type thermoplastic elastomers (c) may be the polymers obtained by introducing, as acid components, unsaturated carboxylic acids or their derivatives (e.g. acid anhydrides or esters) into styrene type thermoplastic elastomers.

The amount of component (c) represents from 5 to 40 parts by mass, preferably 10 to 40 parts by mass, in the total of 100 parts by mass consisting of component (a), component (b1) and component (c).

When the amount of component (c) is greater than the above-mentioned upper limit, the wear resistance of the composition is lowered. Conversely, when its amount is less than the above-mentioned lower limit, the flexibility and formability of the composition tends to decrease.

Examples of metal hydroxides (d) include magnesium hydroxide, aluminium hydroxide. Metal hydroxide particles may not be specifically treated. However, the surface may also be treated with a surface treatment agent such as coupling agents, in particular, silane coupling agents (e.g. amino silane coupling agent, vinyl silane coupling agent, epoxy silane coupling agent, methacryloxysilane coupling agent) or optionally higher fatty acids (e.g. stearic acid, oleic acid).

A silane coupling agent typically contains a Si-O bond which can form a bond with hydroxides. Amongst metal hydroxides, a preferred compound is magnesium hydroxide or aluminium hydroxide whose surface is treated with a coupling agent, preferably a silane coupling agent, in particular an aminosilane coupling agent.

The particles of metal hydroxides may not be pre-treated with a coupling agent. Instead, they may be mixed directly with a resin, then supplemented with a coupling agent, according to a method called "integral blending".

The amount of metal hydroxide usually represents from 30 to 250 parts by mass, preferably from 50 to 200 parts by mass, the total of component (a), component (b1) and component (c) representing 100 parts by mass.

Any known additive may be added into the composition in such an amount that does not damage preferable characteristics of the composition. Examples of the above additives include those usually added into olefin type resins such as heat stabilisers (e.g. oxidation-preventing agents), metal-inactivating agents (copper-pollution preventing agents), lubricants (fatty acids, fatty acid amides, metallic soaps, hydrocarbons e.g. wax, esters, silicone type lubricants), light stabilisers, core-forming agents, electrification-preventing agents, colorants, flame retardant adjuvants, (e.g. zinc borate, silicone type flame retardant, nitrogen type retardant), coupling agents (e.g. silane type coupler, titanate type coupler), softening agents (e.g. process oils), cross-linking adjuvant agents (poly functional monomers).

The resin composition of the invention may be prepared by mixing and/or kneading the components cited above according to any known method.

The resin composition of the invention may be cross-linked according to any known method e.g. electron beam irradiation.

The resin composition of the present invention may be used for coating electrical cables, in particular electrical cables for vehicles according to any known method.

The above, and the other features and advantages of the present invention will be made apparent from the following description of the preferred examples, given as non-limiting examples, with references to the following Examples and Comparative Examples,.

### Examples 1 to 10 and Comparative Examples 1 to 9

The components shown in Tables 1 to 4 were mixed together in the amounts (parts by mass) indicated therein, kneaded in a temperature range of 180°C to 260°C, and extruded into pellets by a two-axis extruder. The pellets were dried and extruded and shaped around a conductor element (7/0.30) having a cross section of 0.5 mm², so as to yield a coating of 0.28 mm thick. The coated resin composition was then cross-linked by electron beam irradiation.

The extrusion-shaping was performed using a nipple and dies respectively having a diameter of about 0.93 mm and about 1.45 mm. The extrusion temperatures for the dies and cylinder were respectively about 180°C to about 250°C and about 160°C to about 240°C. The extrusion line speed was 100m/min.

The electron beam irradiation conditions were as follows.
Device : EPS-750 KV
Irradiation intensity : 120KGy

The following properties of the coated electrical cables obtained in Examples 1 to 10 and Comparative Examples 1 to 9 were evaluated.

### Flexibility :

The flexibility was evaluated on the basis of resistance feeling, when the electrical cable was bent manually.

### Wear resistance and flame retardant quality

Wear resistance and flame retardant quality were measured according to Standards JASO D 611. As to wear resistance, the results were considered good when the minimum value among 3 samples tested was more than 150 times.

### Formability

The formability was evaluated by observing whether or not whiskers were formed when coatings were peeled at the end portion of electrical cables. The results are shown in Tables 1 to 4

**Table 1**

| | Example 1* | Example 2* | Example 3* | Example 4* | Example 5* |
|---|---|---|---|---|---|
| HDPE ¹⁾ | 65 | 50 | 65 | 30 | 40 |
| LLDPE ²⁾ | | | | | |
| EVA ³⁾ | 30 | 10 | | 65 | 30 |
| EEA ⁴⁾ | | | 5 | | |
| MAH-EVA ⁵⁾ | 5 | 40 | 30 | | 30 |
| MAH-EEA ⁶⁾ | | | | 5 | |
| magnesium hydroxide⁷⁾ | 100 | 120 | 100 | 250 | 30 |
| anti-aging agent⁸⁾ | 1 | 1 | 1 | 1 | 1 |
| cross-linking adjuvant agent⁹⁾ | 4 | 4 | 2 | 4 | |
| total | 205 | 225 | 203 | 355 | 131 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 2**

| | Example 6* | Example 7* | Example 8* | Example 9* | Example 10* |
|---|---|---|---|---|---|
| HDPE ¹⁾ | | 50 | 50 | 70 | 40 |
| LLDPE ²⁾ | 90 | | | | |
| EVA ³⁾ | 5 | 30 | | 10 | 40 |
| EEA ⁴⁾ | | | 30 | | |
| MAH-EVA ⁵⁾ | 5 | 20 | 20 | | 20 |
| MAH-EEA ⁶⁾ | | | | 20 | |
| magnesium hydroxide⁷⁾ | 40 | 90 | 100 | 120 | 30 |
| anti-aging agent⁸⁾ | 1 | 1 | 1 | 1 | 1 |
| cross-linking adjuvant agent⁹⁾ | 2 | 4 | 4 | 2 | 2 |
| total | 143 | 195 | 205 | 223 | 133 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 3**

| | Comparative Example 1 | Comparative Example 2 | Comparative Example 3 | Comparative Example 4 | Comparative Example 5 |
|---|---|---|---|---|---|
| HDPE ¹⁾ | 100 | | 20 | | |
| LLDPE ²⁾ | | | | 30 | |
| EVA ³⁾ | | 100 | | 70 | 50 |
| PP ¹⁰⁾ | | | | | |
| MAH-EVA ⁵⁾ | | | 80 | | 50 |
| MAH-PP ¹¹⁾ | | | | | |
| magnesium hydroxide⁷⁾ | 100 | 80 | 50 | 100 | 30 |
| anti-aging agent⁸⁾ | 1 | 1 | 1 | 1 | 1 |
| cross-linking adjuvant agent⁹⁾ | 4 | 2 | 2 | 2 | 2 |
| total | 205 | 183 | 153 | 203 | 133 |
| flexibility | failed | passed | passed | passed | passed |
| wear resistance | passed | failed | failed | failed | failed |
| flame retardant quality | passed | passed | passed | passed | passed |
| formability | failed | passed | passed | passed | passed |

**Table 4**

| | Comparative Example 6 | Comparative Example 7 | Comparative Example 8 | Comparative Example 9 |
|---|---|---|---|---|
| HDPE ¹⁾ | 65 | 60 | 85 | 70 |
| EEDPE²⁾ | | | | |
| EVA ³⁾ | | 10 | 10 | 25 |
| PP ¹⁰⁾ | 30 | | | |
| MAH-EVA ⁵⁾ | 5 | | 5 | 5 |
| MAH-PP ¹¹⁾ | | 30 | | |
| magnesium hydroxide⁷⁾ | 30 | 200 | 10 | 300 |
| anti-aging agent⁸⁾ | 1 | 1 | 1 | 1 |
| cross-linking adjuvant agent⁹⁾ | 2 | 4 | 2 | 2 |
| total | 133 | 305 | 112 | 403 |
| flexibility | failed | failed | passed | failed |
| wear resistance | passed | passed | passed | passed |
| flame retardant quality | passed | passed | failed | passed |
| formability | failed | failed | passed | failed |
| 1) high density polyethylene "HY331" manufactured by Japan Polychem Co., Ltd.. (MFR: 1.0g/ 10 min (JIS K 6760); density: 0.950). | | | | |
| 2) straight-chain low density polyethylene "DFDJ 7540" manufactured by Japan Unika Co., LTd.. (MFR: 0.7 g/10min (JIS K 6760); density: 0.92). | | | | |
| 3) ethylene-vinyl acetate copolymer "EV 360" manufactured by Mitsui Dupont Co., Ltd.. | | | | |
| 4) ethylene-ethyl acrylate copolymer "A 714" manufactured by Mitsui Dupont Co., Ltd.. | | | | |
| 5) maleic anhydride modified ethylene-vinyl acetate copolymer "VR-103" manufactured by Mitsui Dupont Co., Ltd.. | | | | |
| 6) maleic anhydride modified ethylene-ethyl acrylate copolymer "AR-201" manufactured by Mitsui Dupont Co., Ltd.. | | | | |
| 7) KISUMA 5 manufactured by Kyowa Chemicals Co., Ltd.. | | | | |
| 8) Hindered phenol type anti oxidant "Tominox TT" manufactured by Yoshitomi Pharmaceuticals Co. Ltd. | | | | |
| 9) TMPT manufactured by New Nakamura Chemicals Co. Ltd; | | | | |
| 10) polypropylene "RB610A" manufactured by Tokuyama Co., Ltd.. | | | | |
| 11) maleic anihydride modified polypropylene "ER 320P" manufactured by Japan Polyolefin Co., Ltd.. | | | | |

From the results of Comparative Examples 1 to 5, it can be understood that, when the amount of any one component chosen among components (a), (b1) and (c1) is outside the range defined in the present invention, at least one of the tested physical properties is not satisfied.

The results of Comparative Examples 6 and 7 show that, when any one of component (b1) and component (c1) is not used, the flexibility and formability of the composition deteriorate.

The results of Comparative Examples 8 and 9 indicate that, when the amount of magnesium hydroxide, a flame retardant (d) is too small, the flame retardant quality of the composition deteriorates. Conversely, when this amount is too large, the flexibility and formability of the composition deteriorate.

### Examples 11 to 20 and Comparative Examples 10 to 18

The components shown in Tables 5 to 8 were used in the amounts indicated therein (parts by mass). Coated electrical cables were produced through the methods described for Examples 1 to 10, and the properties of the obtained coating were evaluated. The results thus obtained are given in Tables 5 to 8.

**Table 5**

| | Example 11 | Example 12 | Example 13 | Example 14 | Example 15 |
|---|---|---|---|---|---|
| HDPE ¹⁾ | 60 | 50 | 65 | 30 | 50 |
| LLDPE ²⁾ | | | | | |
| EVA ³⁾ | 35 | 10 | | 65 | 30 |
| EEA ⁴⁾ | | | 5 | | |
| MAH-SEBS ¹²⁾ | 5 | 40 | 30 | 5 | 20 |
| MAH-PP ¹¹⁾ | | | | | |
| magnesium hydroxide⁷⁾ | 120 | 100 | 100 | 250 | 30 |
| anti-aging agent⁸⁾ | 1 | 1 | 1 | 1 | 1 |
| cross-linking adjuvant agent⁹⁾ | 4 | 4 | 2 | 4 | 2 |
| total | 225 | 205 | 203 | 355 | 133 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

**Table 6**

| | Example 16 | Example 17 | Example 18 | Example 19 | Example 20 |
|---|---|---|---|---|---|
| HDPE ¹⁾ | | 50 | 50 | 70 | 60 |
| LLDPE ²⁾ | 90 | | | | |
| EVA ³⁾ | 5 | 30 | | 10 | 20 |
| EEA ⁴⁾ | | | 30 | | |
| MAH-SEBS ¹²⁾ | 5 | 20 | 20 | 20 | 20 |
| MAH-PP ¹¹⁾ | | | | | |
| magnesium hydroxide ⁷⁾ | 50 | 90 | 100 | 120 | 30 |
| anti-aging agent⁸⁾ | 1 | 1 | 1 | 1 | 1 |
| cross-linking adjuvant agent⁹⁾ | 4 | 4 | 4 | 4 | 4 |
| total | 155 | 195 | 205 | 225 | 135 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

**Table 7**

| | Comparative Example 10 | Comparative Example 11 | Comparative Example 12 | Comparative Example 13 | Comparative Example 14 |
|---|---|---|---|---|---|
| HDPE ¹⁾ | 100 | | 20 | | |
| LLDPE ²⁾ | | | | 20 | |
| EVA ³⁾ | | 100 | | 80 | 50 |
| PP ¹⁰⁾ | | | | | |
| MAH-SEBS ¹²⁾ | | | 80 | | 50 |
| MAH-PP ¹¹⁾ | | | | | |
| magnesium hydroxide⁷⁾ | 90 | 100 | 80 | 100 | 30 |
| anti-aging agent⁸⁾ | 1 | 1 | 1 | 1 | 1 |
| cross-linking adjuvant agent⁹⁾ | 4 | 2 | 4 | 4 | 4 |
| total | 195 | 203 | 185 | 205 | 135 |
| flexibility | failed | passed | passed | passed | passed |
| wear resistance | passed | failed | failed | failed | failed |
| flame retardant quality | passed | passed | passed | passed | passed |
| formability | passed | passed | passed | passed | passed |

**Table 8**

| | Comparative Example 15 | Comparative Example 16 | Comparative Example 17 | Comparative Example 18 |
|---|---|---|---|---|
| HDPE ¹⁾ | 55 | 60 | 75 | 80 |
| LLDPE ²⁾ | | | | |
| EVA ³⁾ | | 10 | 5 | 10 |
| PP ¹⁰⁾ | 40 | | | |
| MAH-SEBS ¹²⁾ | 5 | | 20 | 20 |
| MAH-PP ¹¹⁾ | | 30 | | |
| magnesium hydroxide ⁷⁾ | 30 | 180 | 10 | 300 |
| anti-aging agent ⁸⁾ | 1 | 1 | 1 | 1 |
| cross-linking adjuvant agent⁹⁾ | 2 | 2 | 4 | 4 |
| total | 133 | 283 | 115 | 405 |
| flexibility | failed | failed | passed | failed |
| wear resistance | passed | passed | passed | passed |
| flame retardant quality | passed | passed | failed | passed |
| formability | failed | failed | passed | failed |

| | | | | |
|---|---|---|---|---|
| Remarks in Tables 5 to 8 : Footnotes 1) to 4) and 7) to 11): see the footnotes for Tables 1 to 4. 12) maleic anhydride modified, hydrogenated styrene-butadiene block copolymer "Tuftec ™ M1913" manufactured by Asahi Chemicals Co., Ltd.. | | | | |

From the results of Comparative Examples 10 to 14, it can be understood that, when the amount of any one component chosen among component (a), (b1) and (c2) is outside the range defined in the present invention, at least one of the physical properties tested is not satisfied.

The results of Comparative Example 15 show that, when an olefin polymer (b1) containing intra molecular oxygen atoms is not used, the flexibility and formability of the composition deteriorate.

The results of Comparative Example 16 indicate that, when an acid modified styrene type thermoplastic elastomer (c2) is not used, the flexibility and formability of the composition are lowered.

The results of Comparative Examples 17 and 18 show that, when the amount of magnesium hydroxide, a flame retardant (d), is too small, the flame retardant quality of the composition is poor. Conversely, when this amount is too large, the flexibility and formability of the composition deteriorate .

### Examples 21 to 30 and Comparative Examples 19 to 27

The components shown in Tables 9 to 12 were used in the amounts (parts by mass) indicated therein, and coated electrical cables were produced according to the methods mentioned for Examples 1 to 10. The properties of the coatings obtained were then evaluated. The results are shown in Tables 9 to 12.

**Table 9**

| | Example 21* | Example 22* | Example 23* | Example 24* | Example 25* |
|---|---|---|---|---|---|
| HDPE ¹⁾ | 65 | 50 | 65 | 30 | 50 |
| LLDPE ²⁾ | | | | | |
| EVA ³⁾ | 30 | 10 | 5 | | 30 |
| EEA ⁴⁾ | | | | 65 | |
| MAH-VLDPE ¹³⁾ | 5 | 40 | 30 | 5 | 20 |
| MAH-PP ¹¹⁾ | | | | | |
| magnesium hydroxide⁷⁾ | 110 | 100 | 120 | 250 | 30 |
| anti-aging agent⁸⁾ | 1 | 1 | 1 | 1 | 1 |
| cross-linking adjuvant agent⁹⁾ | 2 | 4 | 4 | 4 | |
| total | 213 | 205 | 225 | 355 | 131 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 10**

| | Example 26* | Example 27* | Example 28* | Example 29* | Example 30* |
|---|---|---|---|---|---|
| HDPE ¹⁾ | | 50 | 50 | 70 | 40 |
| LLDPE ²⁾ | 90 | | | | |
| EVA ³⁾ | 5 | 30 | | 10 | 40 |
| EEA ⁴⁾ | | | 30 | | |
| MAH-VLDPE ¹³⁾ | 5 | 20 | 20 | 20 | 20 |
| MAH-PP ¹¹⁾ | | | | | |
| magnesium hydroxide⁷⁾ | 40 | 90 | 120 | 100 | 30 |
| anti-aging agent⁸⁾ | 1 | 1 | 1 | 1 | 1 |
| cross-linking adjuvant agent⁹⁾ | 4 | 4 | 4 | 4 | 2 |
| total | 145 | 195 | 225 | 205 | 133 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 11**

| | Comparative Example 19 | Comparative Example 20 | Comparative Example 21 | Comparative Example 22 | Comparative Example 23 |
|---|---|---|---|---|---|
| HDPE ¹⁾ | 100 | | 10 | | |
| LLDPE ²⁾ | | | | 30 | |
| EVA ³⁾ | | 100 | | 70 | 50 |
| PP ¹⁰⁾ | | | | | |
| MAH-VLDPE ¹³⁾ | | | 90 | | 50 |
| MAH-PP ¹¹⁾ | | | | | |
| magnesium hydroxide ⁷⁾ | 100 | 80 | 40 | 100 | 30 |
| anti-aging agent⁸⁾ | 1 | 1 | 1 | 1 | 1 |
| cross-linking adjuvant agent ⁹⁾ | 4 | 2 | 4 | 2 | 2 |
| total | 205 | 183 | 145 | 203 | 133 |
| flexibility | failed | passed | passed | passed | passed |
| wear resistance | passed | failed | failed | failed | failed |
| flame retardant quality | passed | passed | passed | passed | passed |
| formability | failed | passed | passed | passed | passed |

**Table 12**

| | Comparative Example 24 | Comparative Example 25 | Comparative Example 26 | Comparative Example 27 |
|---|---|---|---|---|
| HDPE ¹⁾ | 55 | 60 | 85 | 70 |
| LLDPE ²⁾ | | | | |
| EVA ³⁾ | | 10 | 10 | 25 |
| PP ¹⁰⁾ | 40 | | | |
| MAH-VLDPE ¹³⁾ | 5 | | 5 | 5 |
| MAH-PP ¹¹⁾ | | 30 | | |
| magnesium hydroxide ⁷⁾ | 50 | 200 | 10 | 300 |
| anti-aging agent ⁸⁾ | 1 | 1 | 1 | 1 |
| cross-linking adjuvant agent ⁸⁾ | 4 | 4 | 4 | 2 |
| total | 135 | 305 | 112 | 403 |
| flexibility | failed | failed | passed | failed |
| wear resistance | passed | passed | passed | passed |
| flame retardant quality | passed | passed | failed | passed |
| formability | failed | failed | passed | failed |
| Remarks :in Tables 9 to 12 : Footnotes 1) to 4) and 7) to 11): see the footnotes for Tables 1 to 4. 13) maleic anhydride modified ultra-low density polyethylene "XE070" manufactured by Mitsui Chemicals Co., Ltd..(density: 0.893) | | | | |

The results of Comparative Examples 19 to 23 show that, when the amount of any one component chosen among components (a), (b1) and (c3) is outside the range defined in the present invention, at least one of the properties tested is not satisfied.

The results of Comparative Example 24 indicate that, when an olefin polymer (b1) containing intra-molecular oxygen atoms is not used, the flexibility and formability of the composition are poor.

The results of Comparative Example 25 show that, when an acid modified styrene type thermoplastic elastomer (c3) is not used, the flexibility and formability of the composition are poor.

From the results of Comparative Examples 26 and 27, it can be understood that, when the amount of magnesium hydroxide, flame retardant as component (d), is too small, the flame retardant quality of the composition is poor. Conversely, when this amount is too large, the flexibility and formability of the composition deteriorate.

### Examples 31 to 40 and Comparative Examples 28 to 36

The components shown in Tables 13 to 16 were used in the amounts (parts by mass), to produce coated electrical cables according to the methods described for Examples 1 to 10. The properties of the coatings were then evaluated. The results are shown in Tables 13 to 16.

**Table 13**

| | Example 31* | Example 32* | Example 33* | Example 34* | Example 35* |
|---|---|---|---|---|---|
| HDPE ¹⁾ | 65 | 50 | 65 | 30 | 50 |
| LLDPE ²⁾ | | | | | |
| EVA ³⁾ | 30 | 10 | 5 | | 30 |
| EEA ⁴⁾ | | | | 65 | |
| MAH-EPM ¹⁴⁾ | 5 | 40 | 30 | 5 | |
| MAH-EPDM ¹⁵⁾ | | | | | 20 |
| magnesium hydroxide ⁷⁾ | 100 | 120 | 120 | 250 | 30 |
| anti-aging agent ⁸⁾ | 1 | 1 | 2 | 1 | 1 |
| cross-linking adjuvant agent ⁹⁾ | 4 | 4 | 2 | 4 | 4 |
| total | 205 | 225 | 224 | 355 | 135 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 14**

| | Example 36* | Example 37* | Example 38* | Example 39* | Example 40* |
|---|---|---|---|---|---|
| HDPE ¹⁾ | | 50 | 50 | 70 | 40 |
| LLDPE ²⁾ | 90 | | | | |
| EVA ³⁾ | 5 | 30 | | 10 | 40 |
| EEA ⁴⁾ | | | 30 | | |
| MAH-EPM ¹⁴⁾ | 5 | 20 | 20 | 20 | |
| MAH-EPDM ¹⁵⁾ | | | | | 20 |
| magnesium hydroxide ⁷⁾ | 40 | 90 | 120 | 100 | 90 |
| anti-aging agent ⁸⁾ | 1 | 1 | 1 | 1 | 1 |
| cross-linking adjuvant agent ⁹⁾ | 4 | 4 | 4 | 4 | 2 |
| total | 145 | 195 | 225 | 205 | 193 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 15**

| | Comparative Example 28 | Comparative Example 29 | Comparative Example 30 | Comparative Example 31 | Comparative Example 32 |
|---|---|---|---|---|---|
| HDPE ¹⁾ | 100 | | 10 | | |
| LLDPE ²⁾ | | | | 30 | |
| EVA ³⁾ | | 100 | | 70 | 50 |
| PP ¹⁰⁾ | | | | | |
| MAH-EPM ¹⁴⁾ | | | 90 | | 50 |
| MAH-PP ¹¹⁾ | | | | | |
| magnesium hydroxide ⁷⁾ | 100 | 80 | 60 | 100 | 30 |
| anti-aging agent ⁸⁾ | 1 | 1 | 1 | 1 | 1 |
| cross-linking adjuvant agent ⁹⁾ | 4 | 2 | 4 | 2 | 2 |
| total | 205 | 183 | 165 | 203 | 133 |
| flexibility | failed | passed | passed | passed | passed |
| wear resistance | passed | failed | failed | failed | failed |
| flame retardant quality | passed | passed | passed | passed | passed |
| formability | failed | passed | passed | passed | passed |

**Table 16**

| | Comparative Example 33 | Comparative Example 34 | Comparative Example 35 | Comparative Example 36 |
|---|---|---|---|---|
| HDPE ¹⁾ | 55 | 60 | 85 | 70 |
| LLDPE ²⁾ | | | | |
| EVA ³⁾ | | 10 | 10 | 25 |
| PP ¹⁰⁾ | 40 | | | |
| MAH-VLDPE ¹³⁾ | 5 | | 5 | 5 |
| MAH-PP ¹¹⁾ | | 30 | | |
| magnesium hydroxide ⁷⁾ | 50 | 180 | 10 | 300 |
| anti-aging agent ⁸⁾ | 1 | 1 | 1 | 1 |
| cross-linking adjuvant agent ⁹⁾ | 2 | 4 | 2 | 2 |
| total | 133 | 285 | 112 | 403 |
| flexibility | failed | failed | passed | failed |
| wear resistance | passed | passed | passed | passed |
| flame retardant quality | passed | passed | failed | passed |
| formability | failed | failed | passed | failed |

| | | | | |
|---|---|---|---|---|
| Remarks in Tables 13 to 16 : Footnotes 1) to 4) and 7) to 11): refer to the footnotes for Tables 1 to 4. 14) maleic anhydride modified ethylene-propylene copolymer rubber "T7741P" manufactured by JSR Co., Ltd.. 15) maleic anhydride (2% grafted) modified ethylene-propylenediene copolymer rubber | | | | |

The results of Comparative Examples 28 to 32 suggest that, when the amount of any one component chosen among components (a), (b1) and (c4) is outside the range defined in the present invention, at least one of the properties evaluated is not satisfied.

The results of Comparative Example 33 show that, when an olefin polymer (b1) containing intra-molecular oxygen atoms is not used, the flexibility and formability of the composition are poor.

The results of Comparative Example 34 indicate that, when an acid modified rubber (c4) is not used, the flexibility and formability of the composition are poor.

The results of Comparative Examples 35 and 36 show that, when the amount of magnesium hydroxide, which is a flame retardant (component (d)), is too small, the flame retardant quality of the composition is poor. However, when this amount is too large, the flexibility and formability of the composition are deteriorated.

### Examples 41 to 50 and Comparative Examples 37 to 45

The components shown in Tables 17 to 20 were used in the amounts (parts by mass), to produce coated electrical cables according to the methods described for Examples 1 to 10. The properties of the coatings were then evaluated. The results are shown in Tables 17 to 20.

**Table 17**

| | Example 41 | Example 42 | Example 43 | Example 44 | Example 45 |
|---|---|---|---|---|---|
| HDPE ¹⁾ | 65 | 50 | 65 | 30 | 50 |
| LLDPE ²⁾ | | | | | |
| SEBS ¹⁶⁾ | 30 | 10 | | 65 | 30 |
| SEPS ¹⁷⁾ | | | 5 | | |
| MAH-SEBS ¹²⁾ | 5 | 40 | 30 | 5 | 20 |
| MAH-PP ¹¹⁾ | | | | | |
| magnesium hydroxide ⁷⁾ | 90 | 100 | 90 | 250 | 30 |
| anti-aging agent ⁸⁾ | 1 | 1 | 1 | 1 | 1 |
| cross-linking adjuvant agent ⁹⁾ | 4 | 4 | 4 | 2 | 2 |
| total | 195 | 205 | 195 | 353 | 133 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

**Table 18**

| | Example 46 | Example 47 | Example 48 | Example 49 | Example 50 |
|---|---|---|---|---|---|
| HDPE ¹⁾ | | 50 | 50 | 70 | 60 |
| LLDPE ²⁾ | 90 | | | | |
| SEBS ¹⁶⁾ | 5 | 30 | | 10 | 20 |
| SEPS ¹⁷⁾ | | | 30 | | |
| MAH-SEBS ¹²⁾ | 5 | 20 | 20 | 20 | 20 |
| MAH-PP ¹¹⁾ | | | | | |
| magnesium hydroxide ⁷⁾ | 40 | 120 | 90 | 100 | 30 |
| anti-aging agent ⁸⁾ | 1 | 1 | 1 | 1 | 1 |
| cross-linking adjuvant agent ⁹⁾ | 2 | 2 | 4 | 4 | 4 |
| total | 153 | 223 | 195 | 205 | 135 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

**Table 19**

| | Comparative Example 37 | Comparative Example 38 | Comparative Example 39 | Comparative Example 40 | Comparative Example 41 |
|---|---|---|---|---|---|
| HDPE ¹⁾ | 100 | | 20 | | |
| LLDPE ²⁾ | | | | 20 | |
| SEBS ¹⁶⁾ | | 100 | | 80 | 70 |
| PP ¹⁰⁾ | | | | | |
| MAH-SEBS ¹²⁾ | | | 80 | | 30 |
| MAH-PP ¹¹⁾ | | | | | |
| magnesium hydroxide ⁷⁾ | 90 | 120 | 80 | 100 | 30 |
| anti-aging agent ⁸⁾ | 1 | 1 | 1 | 1 | 1 |
| cross-linking adjuvant agent ⁹⁾ | 4 | 2 | 4 | 4 | 4 |
| total | 195 | 223 | 185 | 205 | 135 |
| flexibility | failed | passed | passed | passed | passed |
| wear resistance | passed | failed | failed | failed | failed |
| flame retardant quality | passed | passed | passed | passed | passed |
| formability | failed | passed | passed | passed | passed |

**Table 20**

| | Comparative Example 42 | Comparative Example 43 | Comparative Example 44 | Comparative Example 45 |
|---|---|---|---|---|
| HDPE ¹⁾ | 55 | 60 | 85 | 80 |
| LLDPE ²⁾ | | | | |
| SEBS ¹⁶⁾ | | 10 | 5 | 10 |
| PP ¹⁰⁾ | 40 | | | |
| MAH-SEBS ¹²⁾ | 5 | | 10 | 10 |
| MAH-PP ¹¹⁾ | | 30 | | |
| magnesium hydroxide ⁷⁾ | 30 | 200 | 10 | 300 |
| anti-aging agent ⁸⁾ | 1 | 1 | 1 | 1 |
| cross-linking adjuvant agent ⁹⁾ | 2 | 4 | 4 | 4 |
| total | 133 | 305 | 115 | 405 |
| flexibility | failed | failed | passed | failed |
| wear resistance | passed | passed | passed | passed |
| flame retardant quality | passed | passed | failed | passed |
| formability | failed | failed | passed | failed |

Remarks in Tables 17 to 20 :
Footnotes 1)to 4) and 7) to 11): see the footnotes for Tables 1 to 4.
12) see the footnotes for Tables 5 to 8 .
16)' hydrogenated styrene-butadiene block copolymer manufactured by Asahi chemicals Co., Ltd..
17) hydrogenated styrene-ethylene-propylene block copolymer manufactured by Kurare Co., Ltd..

From the results of Comparative Examples 37 to 41, it can be understood that, when the amount of any one component chosen among components (a), (b2) and (c2) is outside the range defined in the present invention, at least one of the physical properties evaluated is not sufficient.

The results of Comparative Example 42 indicate that, when an olefin polymer (b2) containing intra-molecular oxygen atoms is not used, the flexibility and formability of the composition are not sufficient.

The results of Comparative Example 43 show that, when an acid modified styrene type thermoplastic elastomer (c2) is not used, the flexibility and formability of the composition are poor.

The results of Comparative Examples 44 and 45 suggest that, when the amount of magnesium hydroxide, which is a flame retardant (component (d)), is too small, the flame retardant quality of the composition is poor. However, when this amount is too large, the flexibility and formability of the composition are poor.

### Examples 51 to 60 and Comparative Examples 46 to 54

The components shown in Tables 21 to 24 were used in the amounts (parts by mass), to produce coated electricalcables according to the methods described for Examples 1 to 10. The properties of the coatings were then evaluated. The results are shown in Tables 21 to 24.

**Table 21**

| | Example 51* | Example 52* | Example 53* | Example 54* | Example 55* |
|---|---|---|---|---|---|
| HDPE ¹⁾ | 65 | 50 | 60 | 30 | 50 |
| LLDPE ²⁾ | | | | | |
| SEES ¹⁶⁾ | 30 | 10 | | 65 | 30 |
| SEPS ¹⁷⁾ | | | 5 | | |
| MAH-EVA ⁵⁾ | | | | | |
| MAH-EEA ⁶⁾ | 5 | 40 | 35 | 5 | 30 |
| magnesium hydroxide ⁷⁾ | 90 | 100 | 100 | 250 | 30 |
| anti-aging agent ⁸⁾ | 1 | 1 | 1 | 1 | 1 |
| cross-linking adjuvant agent ⁹⁾ | 4 | 4 | 2 | 4 | 4 |
| total | 195 | 205 | 203 | 355 | 135 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 22**

| | Example 56* | Example 57* | Example 58* | Example 59* | Example 60* |
|---|---|---|---|---|---|
| HDPE ¹⁾ | | 50 | 50 | 70 | 60 |
| LLDPE ²⁾ | 90 | | | | |
| SEBS ¹⁶⁾ | | 30 | 20 | | |
| SEPS ¹⁷⁾ | 5 | | | 10 | 20 |
| MAH-EVA ⁵⁾ | 5 | 20 | | 20 | |
| MAH-EEA ⁶⁾ | | | 30 | | 20 |
| magnesium hydroxide ⁷⁾ | 70 | 120 | 100 | 120 | 30 |
| anti-aging agent ⁸⁾ | 1 | 1 | 1 | 1 | 1 |
| cross-linking adjuvant agent ⁹⁾ | 4 | 4 | 4 | 4 | 4 |
| total | 175 | 225 | 205 | 225 | 135 |
| flexibility | passed | passed | passed | passed | passed |
| wear resistance | passed | passed | passed | passed | passed |
| flame retardant quality | passed | passed | passed | passed | passed |
| formability | passed | passed | passed | passed | passed |

| | | | | | |
|---|---|---|---|---|---|
| * not according to the invention | | | | | |

**Table 23**

| | Comparative Example 46 | Comparative Example 47 | Comparative Example 48 | Comparative Example 49 | Comparative Example 50 |
|---|---|---|---|---|---|
| HDPE ¹⁾ | 100 | | 20 | | |
| LLDPE ²⁾ | | | | 20 | |
| SEBS ¹⁶⁾ | | 100 | | 80 | 50 |
| PP ¹⁰⁾ | | | | | |
| MAH-EVA ⁵⁾ | | | 80 | | 50 |
| MAH-PP ¹¹⁾ | | | | | |
| magnesium hydroxide ⁷⁾ | 90 | 120 | 50 | 100 | 40 |
| anti-aging agent ⁸⁾ | 1 | 1 | 1 | 1 | 1 |
| cross-linking adjuvant agent ⁹⁾ | 4 | 2 | 2 | 4 | 4 |
| total | 195 | 223 | 153 | 205 | 145 |
| flexibility | failed | passed | passed | passed | passed |
| wear resistance | passed | failed | failed | failed | failed |
| flame retardant quality | passed | passed | passed | passed | passed |
| formability | failed | passed | passed | passed | passed |

**Table 24**

| | Comparative Example 51 | Comparative Example 52 | Comparative Example 53 | Comparative Example 54 |
|---|---|---|---|---|
| HDPE ¹⁾ | 55 | 60 | 90 | 85 |
| LLDPE ²⁾ | | | | |
| SEBS ¹⁶⁾ | | 5 | 5 | 5 |
| PP ¹⁰⁾ | 40 | | | |
| MAH-EVA ⁵⁾ | 5 | | 5 | 10 |
| MAH-PP ¹¹⁾ | | 35 | | |
| magnesium hydroxide ⁷⁾ | 200 | 180 | 10 | 300 |
| anti-aging agent ⁸⁾ | 1 | 1 | 1 | 1 |
| cross-linking adjuvant agent ⁹⁾ | 2 | 2 | 4 | 4 |
| total | 303 | 283 | 115 | 405 |
| flexibility | failed | failed | passed | failed |
| wear resistance | passed | passed | passed | passed |
| flame retardant quality | passed | passed | failed | passed |
| formability | failed | failed | passed | failed |

Remarks in Tables 21 to 24 :
Footnotes 1) to 4) and 7) to 11): see the footnotes for Tables 1 to 4.
Footnotes 16) and 17): see footnotes for Tables 17 to 20.

The results of Comparative Examples 46 to 50 indicate that, when the amount of any one component chosen among components (a), (b2) and (c1) is outside the range defined in the present invention, at least one of the properties evaluated is not satisfactory.

The results of Comparative Example 51 suggest that, when an olefin polymer (b2) containing intra-molecular oxygen atoms is not used, the flexibility and formability of the composition are poor.

The results of Comparative Example 52 show that, when an acid modified styrene type thermoplastic elastomer (c1) is not used, the flexibility and formability of the composition are poor.

The results of Comparative Examples 53 and 54 indicate that, when the amount of magnesium hydroxide, flame retardant component (d), is too small, the flame retardant quality of the composition is poor, whereas, when this amount is too large, the flexibility and formability of the composition are poor.

## Claims

1. A resin composition comprising:
- (a) 30 to 90 parts by mass of high density polyethylene having a melt flow rate (MFR) of 5g/10 min at the most, and a density of at least 0.95;
- (b1) 5 to 65 parts by mass of no acid-modified olefin type polymer containing intra molecular oxygen atoms, which consists of a copolymer of olefins and unsaturated monomers containing oxygen atoms;
- (c) 5 to 40 parts by mass of acid modified styrene type thermoplastic elastomers,
with the proviso that the total of components (a), (b1) and (c) represents 100 parts by mass; and
- (d) 30 to 250 parts by mass of metal hydroxide.

2. A method for preparing an electrical cable, said method comprising the steps of:
- preparing a resin composition defined in claim 1; and
- coating a conductor element with said resin composition.

3. The method according to claim 2, further comprising the step of cross-linking by irradiating said resin composition with electron beams.

4. An electrical cable coated with a resin composition defined in claim 1.

5. The use of a resin composition defined in claim 1 for preparing an electrical cable.

## Patentansprüche

1. Harzzusammensetzung, die umfasst:
- (a) 30 bis 90 Massenteile von hochdichtem Polyethylen mit einer Schmelzflussrate (MFR) von höchstens 5g/10min und einer Dichte von wenigstens 0,95;
- (b1) 5 bis 65 Massenteile eines nicht säuremodifizierten Olefin-Polymers, das intramolekulare Sauerstoffatome enthält, das aus einem Copolymer von Olefinen und ungesättigten Monomeren, die Sauerstoff enthalten, besteht;
- (c) 5 bis 40 Massenteile von säuremodifizierten thermoplastischen Styrol-Elastomeren mit der Bedingung, dass die Gesamtmenge der Komponenten (a), (b1) und (c) 100 Massenteile ausmacht; und
- (d) 30 bis 250 Massenteile Metallhydroxid.

2. Verfahren zur Herstellung eines elektrischen Kabels, wobei das Verfahren die folgenden Schritte umfasst:
- Herstellen einer in Anspruch 1 definierten Harzzusammensetzung; und
- Ummanteln eines Leiterelements mit der Harzzusammensetzung.

3. Verfahren nach Anspruch 2, das ferner den Schritt des Vernetzens durch Bestrahlen der Harzzusammensetzung mit Elektronenstrahlen umfasst.

4. Elektrisches Kabel, das mit einer in Anspruch 1 definierten Harzzusammensetzung ummantelt ist.

5. Verwendung einer in Anspruch 1 definierten Harzzusammensetzung zur Herstellung eines elektrischen Kabels.

## Revendications

1. Composition de résine comprenant :
(a) de 30 à 90 parties en masse de polyéthylène à haute densité présentant un débit de fonte (MFR) inférieur ou égal à 5 g/10 mn, et une densité supérieure ou égale à 0,95 ;
(b1) de 5 à 65 parties en masse d'un polymère du type oléfine non modifiée par acide contenant des atomes d'oxygène intra moléculaire, qui est constitué par un copolymère d'oléfines et des monomères insaturés contenant des atomes d'oxygène ;
(c) de 5 à 40 parties en masse d'élastomères thermoplastiques de type styrène modifié par acide,
à la condition que le total des composants (a), (b1) et (c) représente 100 parts en masse ; et
(d) de 30 à 250 parties en masse d'hydroxyde métallique.

2. Procédé de préparation d'un câble électrique, ledit procédé comprenant les étapes de :
- préparation d'une composition de résine selon la revendication 1 ; et
- revêtement d'un élément conducteur avec ladite composition de résine.

3. Procédé selon la revendication 2, comprenant, en outre, l'étape de réticulation par irradiation de ladite composition de résine avec des faisceaux électroniques.

4. Câble électrique revêtu d'une composition de résine selon la revendication 1.

5. Utilisation d'une composition de résine selon la revendication 1, pour la préparation d'un câble électrique.
